# EUROPEAN PATENT SPECIFICATION

(11) **EP 3 448 020 B1**
(45) Date of publication and mention of the grant of the patent: **06.04.2022**
(21) Application number: 16899278.2
(22) Date of filing: 13.12.2016
(51) Int. Cl.: H04N 7/18, G06T 17/00, G06T 15/04, G06T 19/00

(54) **METHOD AND DEVICE FOR THREE-DIMENSIONAL PRESENTATION OF SURVEILLANCE VIDEO**
VERFAHREN UND VORRICHTUNG ZUR DREIDIMENSIONALEN DARSTELLUNG EINES ÜBERWACHUNGSVIDEOS
PROCÉDÉ ET DISPOSITIF DE PRÉSENTATION TRIDIMENSIONNELLE DE VIDÉO DE SURVEILLANCE

(30) Priority: 21.04.2016 CN 201610251261
(43) Date of publication of application: 27.02.2019
(73) Proprietor: Hangzhou Hikvision Digital Technology Co., Ltd., Hangzhou, Zhejiang 310051 (CN)
(72) Inventor: CHEN, Jie, Hangzhou Zhejiang 310051 (CN); WANG, Quanzhan, Hangzhou Zhejiang 310051 (CN)
(74) Representative: Liebetanz, Michael
(86) International application number: PCT/CN2016/109630
(87) International publication number: WO 2017/181699

(56) References cited:
- CN-A- 101 951 502
- CN-A- 103 136 738
- CN-A- 103 714 529
- CN-A- 103 716 586
- CN-A- 104 539 875
- US-A1- 2010 085 358
- US-B1- 9 305 401
- H. S Sawhney ET AL: "Video Flashlights - Real Time Rendering of Multiple Videos for Immersive Model Visualization", Thirteenth Eurographics Workshop on Rendering, 1 January 2002 (2002-01-01), XP055530964, DOI: 10.2312/EGWR/EGWR02/157-168 Retrieved from the Internet: URL:http://citeseerx.ist.psu.edu/viewdoc/d ownload?doi=10.1.1.93.9168&rep=rep1&type=p df

## Description

The present application claims the priority to a Chinese patent application No. 201610251261.X, filed with the State Intellectual Property Office of the People's Republic of China on April 21, 2016 and entitled "METHOD AND DEVICE FOR THREE-DIMENSIONAL PRESENTATION OF SURVEILLANCE VIDEO", which is incorporated herein by reference in its entirety.

### Technical Field

The application relates to the technical field of video surveillance, and in particular to a method and apparatus for three-dimensional presentation of a surveillance video.

### Background

With the development of video technology, a method for three-dimensional presentation of a video (i.e., a method for simulating a real, dynamic three-dimensional scene through processing a two-dimensional video image ) is increasingly used. For example, in the field of video surveillance, the three-dimensional presentation of a surveillance video captured by a video capture device can provide a user with a more intuitive view of the video image of the scene under surveillance.

Related methods for three-dimensional presentation of a surveillance video typically include only a three-dimensionalization of a scene under surveillance. That is, a corresponding three-dimensional background model is pre-established for each scene under surveillance. During the presentation of the surveillance video captured for each scene under surveillance, the three-dimensional background model of the scene is first presented. The captured surveillance video is then presented in its entirety on the three-dimensional background model in the form of a pop-up window, in order to achieve the purpose of three-dimensional presentation of the surveillance video.

However, in the methods described above, the surveillance video is still separated from the three-dimensional background model, in which each frame of the surveillance video is present in its entirety on the three-dimensional background model. Accordingly, the surveillance video cannot be deeply integrated with the three-dimensional background model. The three-dimensional presentation of the surveillance video is not intuitive. The document "Video Flashlights Real Time Rendering of Multiple Videos for Immersive Model Visualization" by H. S. Sawhney et al and published in 2002 discloses real-time mapping of live videos as textures on 3D models applied to video monitoring systems.

### Summary

Embodiments of the present application are aimed to provide a method and apparatus for three-dimensional presentation of a surveillance video to improve the performance of the three-dimensional presentation of the surveillance video. The present invention is defined by the appended independent claims.

### Brief Description of the Drawings

To describe the solutions of embodiments of the present application and the prior art more clearly, the accompanying drawings to be used in the embodiments and the prior art are described briefly below. Obviously, the accompanying drawings described below are merely some embodiments of the application, based on which those skilled in the art can obtain other drawings without creative efforts.
Fig. 1 is a flowchart of a method for three-dimensional presentation of a surveillance video provided by an embodiment of the present application;
Fig. 2 is another flowchart of a method for three-dimensional presentation of a surveillance video by an embodiment of the present application;
Fig. 3 is a structural schematic diagram of an apparatus for three-dimensional presentation of a surveillance video provided by an embodiment of the present application;
Fig. 4 is another structural schematic diagram of an apparatus for three-dimensional presentation of a surveillance video provided by an embodiment of the present application;
Fig. 5 is a structural schematic diagram of an electronic device provided by an embodiment of the present application.

### Detailed Description

In order to provide a better three-dimensional presentation of a surveillance video, embodiments of the present application provide a method and apparatus for three-dimensional presentation of a surveillance video.

Technical solutions in the embodiments of the present application are clearly and completely described below with reference to the accompanying drawings in the embodiments of the present application. With reference to the accompanying drawings, a detailed description of the present application is provided in conjunction with the embodiments.

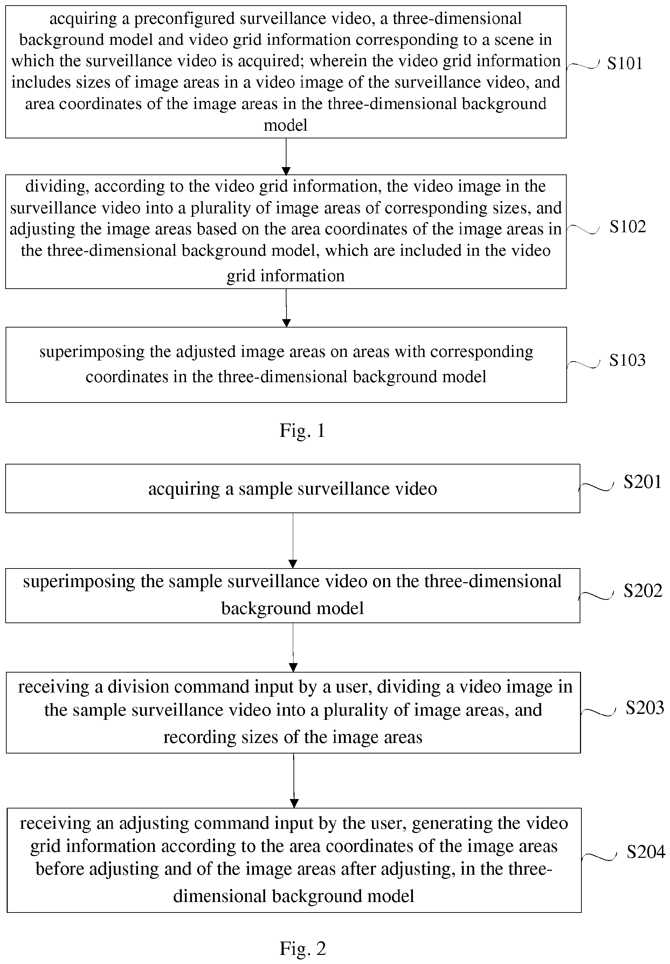

In order to provide a better three-dimensional presentation of a surveillance video, a method for three-dimensional presentation of a surveillance video is provided in an embodiment of the present application. As shown in Fig. 1, the method includes following steps:
S101, acquiring a surveillance video, a preconfigured three-dimensional background model and video grid information corresponding to a scene in which the surveillance video is captured; wherein the video grid information includes sizes of image areas in a video image of the surveillance video, and area coordinates of the image areas in the three-dimensional background model.

The method provided in the embodiment of the present application is applicable to an electronic device. Specifically, the electronic device may include, for example, a notebook computer, a smart terminal, a desktop computer, a portable computer, and the like.

In the embodiment of the present application, in order to provide a better three-dimensional presentation of a surveillance video, for each scene under surveillance, the electronic device preconfigures a three-dimensional background model and video grid information corresponding to the scene under surveillance, so that during presentation of the surveillance video captured in the scene, the surveillance video is presented according to the three-dimensional background model and video grid information corresponding to the scene under surveillance. A better three-dimensional presentation of the surveillance video is thus obtained.

It is noted that the scene under surveillance described above may be an indoor scene or an outdoor scene, which is not limited in the embodiment of the present application.

In this embodiment of the present application, the three-dimensional background model corresponding to the scene under surveillance can be generated based on the prior arts, the detail of which is thus omitted herein.

The three-dimensional background model described above may be a model representing a scene with a polygon, which has a certain three-dimensional stereoscopic effect. The video grid information described above is used to represent position mapping relation of the two-dimensional video images in the three-dimensional background model. Specifically, the grid information includes the sizes of image areas in a video image of the surveillance video, and the area coordinates of the image areas in the three-dimensional background model.

In this embodiment of the present application, the electronic device first acquires a surveillance video, a preconfigured three-dimensional background model and video grid information corresponding to a scene in which the surveillance video is captured, so as to provide a better three-dimensional presentation of the surveillance video according to the acquired three-dimensional background model and video grid information. In this embodiment of the present application, a scene in which the surveillance video is captured can be referred to as a scene for the acquired surveillance video.

Specifically, during the acquisition of the surveillance video, the electronic device acquires a surveillance video captured in real time by a video capture device; or acquire a surveillance video stored therein from a storage device.

S102, dividing, according to the video grid information, the video image in the surveillance video into a plurality of image areas of corresponding sizes, and adjusting the image areas based on the area coordinates of the image areas in the three-dimensional background model, which are included in the video grid information.

After acquiring the surveillance video, the three-dimensional background model and the video grid information corresponding to the surveillance video, the electronic device divides a video image in the surveillance video, according to the video grid information, into a plurality of image areas of corresponding sizes; and adjusts the image areas based on the area coordinates of the image areas in the three-dimensional background model, which are included in the video grid information,.

It is noted that each scene under surveillance may contain some fixed reference objects, such as the walls, floor, and roof in an indoor scene. Accordingly, such fixed reference objects would also be contained in the three-dimensional background model generated according to the scene under surveillance. Each of the fixed reference objects occupies an area in the three-dimensional background model, for example, the areas for the walls, floor, and roof included therein. Also, the same areas are also included in a two-dimensional video image captured in the scene under surveillance. However, the information such as the size and coordinates of an area in the two-dimensional video image may be different from the information such as the size and coordinates of the corresponding area in the three-dimensional background model.

Therefore, in the embodiment of the present application, in order to deeply integrate the two-dimensional surveillance video into the three-dimensional background model, the electronic device first divides, according to the grid information, a video image in the surveillance video into a plurality of image areas of corresponding sizes. For example, the video image in the surveillance video can be divided into a plurality of image areas of corresponding sizes according to the sizes of the image areas in the video image of the surveillance video included in the video grid information.

After the video image in the surveillance video is divided into a plurality of image areas, the electronic device further adjusts the image areas based on the area coordinates of the image areas in the three-dimensional background model, which are included in the video grid information. Specifically, the position, scale, and the like of each image area are adjusted so that each image area fits with the corresponding area in the three-dimensional background model. For example, for each image area, a plurality of mark points therein can be selected, and the coordinates of the plurality of mark points can be used to identify the area coordinates of the image area in the three-dimensional background model.

For example, when the scene under surveillance is an indoor scene, the video grid information corresponding to the scene under surveillance can include the sizes of the walls, floor, and roof in the video image of the surveillance video, so that the electronic device can divide correspondingly, based on the video grid information, the surveillance video into a plurality of wall areas, a floor area, and a roof area. The video grid information can also include area coordinates, in the three-dimensional background model, of the wall areas, the floor area, and the roof area in the video image of the surveillance video. If the size of any of the wall areas in the video image is smaller than the size of the corresponding wall area in the three-dimensional background model, the electronic device can enlarge the wall area in the video image, so that the size of the wall area in the video image is equal to the size of the corresponding wall area in the three-dimensional background model.

S103, superimposing the adjusted image areas on areas with corresponding coordinates in the three-dimensional background model.

By means of dividing the surveillance video and adjusting the image areas obtained after the division, the image areas included in the surveillance video fit with the corresponding areas in the three-dimensional background model.

The electronic device thus superimposes the adjusted image areas on areas with corresponding coordinates in the three-dimensional background model. For example, the adjusted image areas can cover the areas with corresponding coordinates in the three-dimensional background model, so that the surveillance video is presented in the three-dimensional background model. A better three-dimensional presentation is thus provided.

In the method for three-dimensional presentation of a surveillance video provided in the embodiment of the present application, the video grid information includes sizes of image areas in a video image of the surveillance video, and area coordinates of the image areas in the three-dimensional background model. Each of the image areas is adjusted based on the area coordinates of the image areas in the three-dimensional background model, which are included in the video grid information, so that the image areas can fit with the three-dimensional background model. The adjusted image areas are further superimposed on areas with corresponding coordinates in the three-dimensional background model. As such, the surveillance video can be deeply integrated with the three-dimensional background model. A better presentation of the surveillance video is provided.

In one implementation of the embodiment of the present application, the electronic device can transmit a preconfigured three-dimensional background model and video grid information corresponding to each scene under surveillance to each video capture device. The video capture device can locally store the received three-dimensional background model and the video grid information. In this case, after capturing a surveillance video, the video capture device can encapsulate the locally stored three-dimensional background model and video grid information in the captured surveillance video and transmit the three-dimensional background model and video grid information to the electronic device along with the surveillance video.

In this case, after acquiring the surveillance video, the electronic device can directly acquire the preconfigured three-dimensional background model and video grid information encapsulated in the surveillance video and corresponding to the scene in which the surveillance video is captured. Specifically, in the embodiment of the present application, the video capture device may transmit, for each key frame of the surveillance video, the three-dimensional background model and video grid information encapsulated in the surveillance video to the electronic device. Alternatively, in order to save the network resources occupied by data transmission, the video capture device may transmit the three-dimensional background model and video grid information only at the beginning of the transmission of the surveillance video.

In the above approach, the electronic device transmits the three-dimensional background model and video grid information to the video capture device. The video capture device needs to locally store the three-dimensional background model and the video grid information and encapsulate the three-dimensional background model and video grid information in the captured surveillance video. It should be understood that, for this purpose, the video capture device has to be configured to be capable of encapsulating the three-dimensional background model and video grid information in the captured surveillance video. Thus, the adaptability is low. In addition, in the case that the electronic device acquires a surveillance video captured in real time by a video capture device, the video capture device needs to, after capturing the surveillance video, encapsulate the three-dimensional background model and video grid information in the captured surveillance video before the transmission thereof. Such a process may affect the efficiency of the real time transmission of the surveillance video. However, the electronic device does not need to look up a three-dimensional background model corresponding to the scene under surveillance according to a scene under surveillance. Thus the accuracy of the three-dimensional background model obtained can be ensured.

In another implementation of the embodiment of the present application, to improve the adaptability of the method for three-dimensional presentation of a surveillance video as provided in the embodiment of the present application and improve the transmission efficiency of the surveillance video, the electronic device can store the preconfigured three-dimensional background model and video grid information in a preset storage space, such as the storage space of its own or a server. In addition, the identification information of the video capture device corresponding to the three-dimensional background model and video grid information can also be stored with the three-dimensional background model and video grid information.

In this case, once a surveillance video is acquired, the electronic device can first determine the identification information of a video capture device that captures the surveillance video, and then acquire, from the preset storage space, the three-dimensional background model and video grid information corresponding to the identification information.

Further, in this embodiment of the present application, the electronic device can preconfigure a three-dimensional background model corresponding to the scene under surveillance.

Specifically, the electronic device can first receive scene information input by a user, wherein the scene information includes at least the information about a size of the scene and information about the sizes and positions of fixed reference objects therein. For example, in the case that the scene under surveillance is an indoor scene, the scene information input by the user may include the length, width, and height of the room, and sizes and positions of the reference objects such as walls, floor, and roof of the room; in the case that the scene under surveillance is a street scene, the scene information input by the user may include the length and width of the street, and sizes and positions of reference objects such as important structures and trees around the street.

The electronic device can generate a corresponding three-dimensional background model according to the received scene information input by the user. In this embodiment of the present application, the prior arts may be employed by the electronic device to generate a corresponding three-dimensional background model according to the scene information input by the user, the process of which is omitted herein.

Further, in the embodiment of the present application, after generating a three-dimensional background model, the electronic device can also generate, for each scene under surveillance, video grid information corresponding to the scene under surveillance and the three-dimensional background model.

Specifically, as shown in Fig.2, the method for three-dimensional presentation of a surveillance video provided by an embodiment of the present application further includes the following steps:
S201, acquiring a sample surveillance video.

In the embodiment of the present application, after the electronic device generates a corresponding three-dimensional background model for any scene under surveillance, when generating the video grid information, the electronic device first acquires a sample surveillance video.

For example, when a corresponding video capture device for any scene under surveillance has been set (i.e., a lens of the video capture device does not rotate, the position is fixed, and the focal length remains unchanged), the surveillance video captured by the video capture device can act as a sample surveillance video used to generate the video grid information corresponding to the scene under surveillance. Parameters that the video capture device uses to capture the sample surveillance video are the same as those used to capture surveillance videos during its normal operation. The parameters include a shooting angle, shooting position, focal length and so forth.

S202, superimposing the sample surveillance video on the three-dimensional background model.

In the embodiment of the present application, the electronic device superimposes the sample surveillance video, once acquired, on the preconfigured three-dimensional background model to generate video grid information corresponding to the three-dimensional background model.

S203, receiving a division command input by a user, dividing a video image in the sample surveillance video into a plurality of image areas, and recording sizes of the image areas.

In the embodiment of the present application, after the sample surveillance video has been superimposed on the three-dimensional background model, the user inputs, according to the scene under surveillance corresponding to the present three-dimensional background model, a division command to divide a video image in the sample surveillance video.

Accordingly, the electronic device receives the division command input by the user to divide the video image in the sample surveillance video into a plurality of image areas, and record the sizes of the image areas.

For example, in the case that the scene under surveillance is an indoor scene, the division command input by the user may be directed to divide the video image in the sample surveillance video into a plurality of wall areas, at least one floor area, and at least one roof area corresponding to areas included in the three-dimensional background model. After receiving the division command, the electronic device can accordingly divide the video image in the sample surveillance video into a plurality of wall areas, at least one floor area, and at least one roof area, and further record the sizes of the image areas.

As described above, the parameters that the video capture device uses to capture the sample surveillance video are the same as those used to capture surveillance videos during its normal operation. Accordingly, the sizes and positions of image areas in the video image of the sample surveillance video captured by the video capture device are the same as those of surveillance videos captured during its normal operation. After the video image in the sample surveillance video has been divided into a plurality of image areas corresponding to the areas included in the three-dimensional background model and sizes of the image areas have been recorded, the electronic device can divide, upon receiving a surveillance video and a command of dividing the video image in the surveillance video, the video image in the surveillance video into a plurality of image areas of the same sizes as the recorded sizes of the image areas. In other words, the video image in the surveillance video can be divided into a plurality of image areas corresponding to the areas included in the three-dimensional background model.

S204, receiving an adjusting command input by the user, generating the video grid information according to the area coordinates of the image areas before adjusting and of the image areas after adjusting, in the three-dimensional background model.

In the embodiment of the present application, after the sample surveillance video has been divided into a plurality of image areas, the user inputs, according to the areas included in the present three-dimensional background model, an adjusting command to adjust the image areas. For example, the adjusting command is directed to adjust positions and scaling of the image areas so that the image areas fit with the corresponding areas in the three-dimensional background model.

Therefore, the electronic device receives the adjusting command input by the user, and generates video grid information according to the area coordinates of the image areas, before and after adjusting, in the three-dimensional background model.

For example, in the case that the surveillance scene is an indoor scene, the electronic device can divide, according to the division command input by the user, the sample video into a plurality of wall areas, at least one floor area, and at least one roof area. For any wall area in the video image, if the size of the wall area is smaller than that of a corresponding wall area in the three-dimensional background model, the user can input a command to enlarge the wall area. The electronic device can enlarge the size of the wall area upon receiving the command, so that the size of the wall area in the video image is the same as that in the three-dimensional background model. Alternatively, vertices of the wall area in the video image can be adjusted to coincide with those of the corresponding wall area in the three-dimensional background model according to a position adjusting command input by the user.

It could be understood that, for one same image area, the electronic device may adjust the image area for one or more times. In addition, the electronic device may adjust, according to the adjusting command input by the user, one or more of the image areas included in the video image.

After the electronic device has adjusted the image areas, the video grid information can be generated according to the area coordinates of the image areas, before and after adjusting, in the three-dimensional background model.

In one implementation, after each time the electronic device completes the adjustment of an image area, a prompt box can pop up to prompt the user whether to input confirmation information. The absence of confirmation information received from the user may indicate that the user wants to further adjust the image area. Accordingly, the electronic device may not generate the video grid information. Reception of confirmation information from the user may indicate that the adjusting of the image area is finished. The electronic device can then generate the video grid information according to the area coordinates of the image areas, before and after adjusting, in the three-dimensional background model (i.e., coordinates of the present image areas in the three-dimensional background model).

It could be understood that, after the electronic device finished the adjusting of the image areas of the sample surveillance video so that the adjusted image areas fit with the corresponding areas in the three-dimensional background model, and generated the video grid information according to the area coordinates of the image areas, before and after adjusting, in the three-dimensional background model, when receiving a surveillance video and adjusting image areas in a video image of the surveillance video, the corresponding image areas in the surveillance video received are adjusted in the same manner in which the image areas of the sample surveillance video have been adjusted. As such, the adjusted image areas of the surveillance video fit with corresponding areas in the three-dimensional background model. A better three-dimensional presentation of the surveillance video can be provided.

In the method provided in the embodiment of the present application, a three-dimensional background model and video grid information are preconfigured. The video grid information includes sizes of image areas in a video image of the surveillance video, and area coordinates of image areas in the three-dimensional background model. The image areas in the surveillance video are adjusted according to the area coordinates of the image areas in the three-dimensional background model, so that the image areas fit with the three-dimensional background model. The adjusted image areas are further superimposed on areas with corresponding coordinates in the three-dimensional background model. A deep integration of the surveillance video with the three-dimensional background model is achieved. A better three-dimensional presentation of the surveillance video is provided.

In accordance with the method embodiments above, a corresponding apparatus embodiment is also provided in the present application.

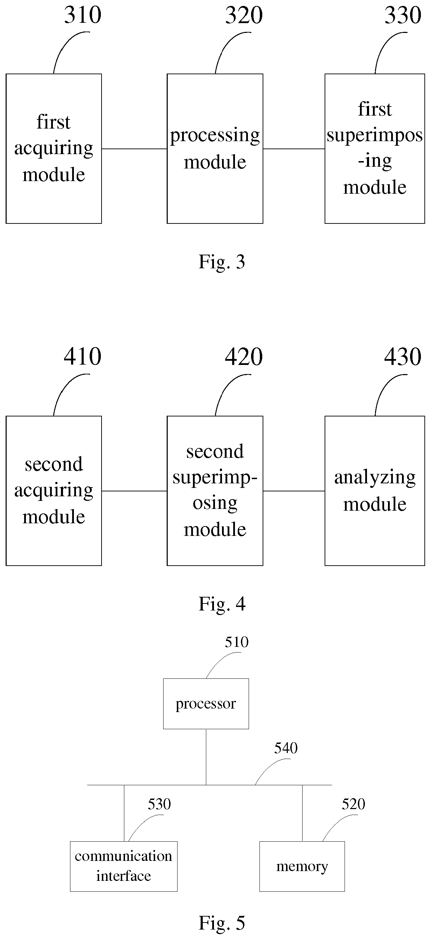

Fig. 3 illustrates an apparatus for three-dimensional presentation of a surveillance video provided by an embodiment of the present application, applicable to an electronic device. The apparatus includes:
a first acquiring module 310, configured to acquire a surveillance video, a preconfigured three-dimensional background model and video grid information corresponding to a scene in which the surveillance video is captured; wherein the video grid information includes sizes of image areas in a video image of the surveillance video, and area coordinates of the image areas in the three-dimensional background model;
a processing module 320, configured to divide, according to the video grid information, the video image of the surveillance video into a plurality of image areas of corresponding sizes, and adjust the image areas based on the area coordinates of the image areas in the three-dimensional background model, which are included in the video grid information; and
a first superimposing module 330, configured to superimpose the adjusted image areas on areas with corresponding coordinates in the three-dimensional background model.

In the embodiment of the apparatus for three-dimensional presentation of a surveillance video, the video grid information includes sizes of image areas in a video image of the surveillance video, and area coordinates of the image areas in the three-dimensional background model. Each of the image areas is adjusted based on the area coordinates of the image areas in the three-dimensional background model, which are included in the grid information, so that the image areas fit with the three-dimensional background model. The adjusted image areas are further superimposed on areas with corresponding coordinates in the three-dimensional background model. As such, the surveillance video can be deeply integrated with the three-dimensional background model. A better presentation of the surveillance video is provided.

Further, the first acquiring module 310 includes:
a first acquiring sub-module (now shown), configured to acquire a preconfigured three-dimensional background model and video grid information corresponding to a scene in which the surveillance video is captured and encapsulated in the surveillance video; and
a second acquiring sub-module (now shown), configured to determine identification information of a video capture device that captures the surveillance video, and then acquire, from a preset storage space, a three-dimensional background model and video grid information corresponding to the identification information.

Further, the apparatus further includes:
a transmitting module (now shown), configured to transmit the three-dimensional background model and video grid information to the video capture device that captures the surveillance video, so as to cause the video capture device to encapsulate the three-dimensional background model and video grid information in the surveillance video.

Further, the apparatus further includes:
a receiving module (now shown), configured to receive scene information input by a user, wherein the scene information includes at least information about a size of the scene and information about the sizes and positions of fixed reference objects in the scene; and
a first generating module (now shown), configured to generate the three-dimensional background model according to the scene information input by the user.

Further, as shown in FIG. 4, the apparatus for three-dimensional presentation of a surveillance video provided by the embodiment of the present application further includes:
a second acquiring module 410, configured to acquire a sample surveillance video;
a second superimposing module 420, configured to superimpose the sample surveillance video on the three-dimensional background model;
an analyzing module 430, configured to receive a division command input by the user, divide a video image in the sample surveillance video into a plurality of image areas, and record sizes of the image areas; and
a second generating module 440, configured to receive an adjusting command input by the user, generate the video grid information according to the area coordinates of the image areas before adjusting and of the image areas after adjusting, in the three-dimensional background model.

In the apparatus provided by the embodiment of the present application, a three-dimensional background model and video grid information corresponding to a scene under surveillance can be preconfigured. The video grid information includes sizes of image areas in a video image of the surveillance video, and area coordinates of image areas in the three-dimensional background model. The image areas are adjusted according to the area coordinates of the image areas in the three-dimensional background model, so that the image areas fit with the three-dimensional background model. The adjusted image areas are superimposed on areas with corresponding coordinates in the three-dimensional background model. A deep integration of the surveillance video with the three-dimensional background model is achieved. A better three-dimensional presentation of the surveillance video is provided.

Accordingly, a storage medium is also provided in the present application. The storage medium is configured to store executable program code, which performs the method for three-dimensional presentation of a surveillance video when being executed. The method includes:
acquiring a surveillance video, a preconfigured three-dimensional background model and video grid information corresponding to a scene in which the surveillance video is captured; wherein the video grid information includes sizes of image areas in a video image of the surveillance video, and area coordinates of the image areas in the three-dimensional background model;
dividing, according to the video grid information, the video image of the surveillance video into a plurality of image areas of corresponding sizes, and adjusting the image areas based on the area coordinates of the image areas in the three-dimensional background model, which are included in the video grid information; and
superimposing the adjusted image areas on areas with corresponding coordinates in the three-dimensional background model.

In the embodiment of the present application, the video grid information includes sizes of image areas in a video image of the surveillance video, and area coordinates of the image areas in the three-dimensional background model. Each of the image areas is adjusted based on the area coordinates of the image areas in the three-dimensional background model, which are included in the video grid information, so that the image areas can fit with the three-dimensional background model. The adjusted image areas are further superimposed on areas with corresponding coordinates in the three-dimensional background model. As such, the surveillance video can be deeply integrated with the three-dimensional background model. A better presentation of the surveillance video is provided.

Accordingly, an application program is provided in the present application. The application program is configured to perform the method for three-dimensional presentation of a surveillance video when being executed. The method includes:
acquiring a surveillance video, a preconfigured three-dimensional background model and video grid information corresponding to a scene in which the surveillance video is captured; wherein the video grid information includes sizes of image areas in a video image of the surveillance video, and area coordinates of the image areas in the three-dimensional background model;
dividing, according to the video grid information, the video image of the surveillance video into a plurality of image areas of corresponding sizes, and adjusting the image areas based on the area coordinates of the image areas in the three-dimensional background model, which are included in the video grid information; and
superimposing the adjusted image areas on areas with corresponding coordinates in the three-dimensional background model.

In the embodiment of the present application, the video grid information includes sizes of image areas in a video image of the surveillance video, and area coordinates of the image areas in the three-dimensional background model. Each of the image areas can be adjusted based on the area coordinates of the image areas in the three-dimensional background model, which are included in the video grid information, so that the image areas can fit with the three-dimensional background model. The adjusted image areas are further superimposed on areas with corresponding coordinates in the three-dimensional background model. As such, the surveillance video can be deeply integrated with the three-dimensional background model. A better presentation of the surveillance video is provided.

Accordingly, an electronic device is provided in the present application, as shown in Fig. 5. The electronic device includes:
a processor 510, a memory 520, a communication interface 530, and a bus 540; wherein,
the processor 510, the memory 520 and the communication interface 530 connect and communicate with each other through the bus 540;
the memory 520 is configured to store executable program code;
the processor 510 is configured to read the executable program code stored in the memory to execute a program corresponding to the executable program code, in order to perform the method for three-dimensional presentation of a surveillance video. The method includes:
   acquiring a surveillance video, a preconfigured three-dimensional background model and video grid information corresponding to a scene in which the surveillance video is captured; wherein the video grid information includes sizes of image areas in a video image of the surveillance video, and area coordinates of the image areas in the three-dimensional background model;
   dividing, according to the video grid information, the video image of the surveillance video into a plurality of image areas of corresponding sizes, and adjusting the image areas based on the area coordinates of the image areas in the three-dimensional background model, which are included in the video grid information; and
   superimposing the adjusted image areas on areas with corresponding coordinates in the three-dimensional background model.

In the embodiment of the present application, the video grid information includes sizes of image areas in a video image of the surveillance video, and area coordinates of the image areas in the three-dimensional background model. Each of the image areas can be adjusted based on the area coordinates of the image areas in the three-dimensional background model, which are included in the video grid information, so that the image areas can fit with the three-dimensional background model. The adjusted image areas are further superimposed on areas with corresponding coordinates in the three-dimensional background model. As such, the surveillance video can be deeply integrated with the three-dimensional background model. A better presentation of the surveillance video is provided.

For the apparatus/storage medium/application/electronic device embodiment, since it is basically similar to the method embodiment, the description is relatively simple, and for related parts, reference can be made to the partial description of the method embodiment.

It should be noted that in the claims and the specification, relationship terms such as "first", "second" and the like are only used to distinguish one entity or operation from another entity or operation, and do not necessarily require or imply that there is any such actual relationship or order between those entities or operations. Moreover, the terms "comprise" "include" or any other variants are intended to cover a non-exclusive inclusion, such that processes, methods, objects or devices including a series of elements include not only those elements, but also other elements not specified or the elements inherent to those processes, methods, objects or devices.

The various embodiments in the specification are described in an interrelated way, and identical or similar parts in various embodiments can refer to one another. In addition, the description for each embodiment focuses on the differences from other embodiments. In particular, the embodiment of the system is described briefly, since it is substantially similar to the embodiment of the method, and the related contents can refer to the description of the embodiment of the method.

Those of ordinary skill in the art can appreciate that all or a part of the embodiments described above can be implemented by instructing relevant hardware through a program. The program can be stored in a computer readable storage medium such as a ROM/RAM, magnetic disk, and optic disk.

## Claims

1. A method for three-dimensional presentation of a surveillance video, which is applicable to an electronic device, comprising:
acquiring a surveillance video, a preconfigured three-dimensional background model and video grid information corresponding to a scene in which the surveillance video is captured; wherein the video grid information comprises sizes of image areas in a video image of the surveillance video, and area coordinates of the image areas in the three-dimensional background model;
dividing, according to the video grid information, the video image of the surveillance video into a plurality of image areas of corresponding sizes, and adjusting a position and scale of each of the plurality of image areas divided from the video image based on the area coordinates of image areas in the three-dimensional background model, which are comprised in the video grid information, so that each image area fits with a corresponding area in the three-dimensional background model; and
superimposing the adjusted image areas on areas with corresponding coordinates in the three-dimensional background model;
wherein the video grid information is obtained by the following operations:
acquiring a sample surveillance video, wherein the parameters that the video capture device uses to capture the sample surveillance video are the same as those used to capture the surveillance video;
superimposing the sample surveillance video on the three-dimensional background model;
receiving a division command input by the user, dividing a video image in the sample surveillance video into multiple image areas, and recording sizes of these image areas;
receiving an adjusting command input by the user to adjust a position and scale of each of the multiple image areas, the adjusting command being directed to adjust positions and scaling of the image areas,
so that each image area fits with a corresponding area in the three-dimensional background model; and
generating the video grid information according to area coordinates of the multiple image areas before adjusting and of the multiple image areas after adjusting in the three-dimensional background model.

2. The method of claim 1, wherein acquiring a preconfigured three-dimensional background model and video grid information corresponding to a scene in which the surveillance video is captured comprises:
acquiring a preconfigured three-dimensional background model and video grid information that are encapsulated in the surveillance video and correspond to the scene in which the surveillance video is captured; and
determining identification information of a video capture device that captures the surveillance video, and then acquiring, from a preset storage space, a three-dimensional background model and video grid information corresponding to the identification information.

3. The method of claim 2, wherein configuring the three-dimensional background model comprises:
receiving scene information input by a user, wherein the scene information comprises at least information about a size of the scene and information about sizes and positions of fixed reference objects in the scene; and
generating the three-dimensional background model according to the scene information input by the user.

4. The method of claim 2 or 3, wherein when acquiring a preconfigured three-dimensional background model and video grid information that are encapsulated in the surveillance video and correspond to the scene in which the surveillance video is captured, in the process of acquiring a surveillance video, a preconfigured three-dimensional background model and video grid information corresponding to a scene in which the surveillance video is captured, the method further comprises:
transmitting the three-dimensional background model and video grid information to the video capture device that captures the surveillance video, so as to cause the video capture device to encapsulate the three-dimensional background model and video grid information in the surveillance video.

5. An apparatus for three-dimensional presentation of a surveillance video, which is applicable to an electronic device, comprising:
a first acquiring module, configured to acquire a surveillance video, a preconfigured three-dimensional background model and video grid information corresponding to a scene in which the surveillance video is captured; wherein the video grid information comprises sizes of image areas in a video image of the surveillance video, and area coordinates of the image areas in the three-dimensional background model;
a processing module, configured to divide, according to the video grid information, the video image of the surveillance video into a plurality of image areas of corresponding sizes, and adjust a position and scale of each of the plurality of image areas divided from the video image based on the area coordinates of image areas in the three-dimensional background model, which are comprised in the video grid information, so that each image area fits with a corresponding area in the three-dimensional background model;
a first superimposing module, configured to superimpose the adjusted image areas on areas with corresponding coordinates in the three-dimensional background model;
a second acquiring module, configured to acquire a sample surveillance video, wherein the parameters that the video capture device uses to capture the sample surveillance video are the same as those used to capture the surveillance video;
a second superimposing module, configured to superimpose the sample surveillance video on the three-dimensional background model;
an analyzing module, configured to receive a division command input by the user, divide a video image in the sample surveillance video into multiple image areas, and record sizes of these image areas; and
a second generating module, configured to receive an adjusting command input by the user to adjust a position and scale of each of the multiple image areas, , the adjusting command being directed to adjust positions and scaling of the image areas, so that each image area fits with a corresponding area in the three-dimensional background model; and
generate the video grid information according to the area coordinates of the multiple image areas before adjusting and of the multiple image areas after adjusting in the three-dimensional background model.

6. The apparatus of claim 5, wherein the first acquiring module comprises:
a first acquiring sub-module, configured to acquire a preconfigured three-dimensional background model and video grid information that are encapsulated in the surveillance video and correspond to the scene in which the surveillance video is captured; and
a second acquiring sub-module, configured to determine identification information of a video capture device that captures the surveillance video, and then acquire, from a preset storage space, a three-dimensional background model and video grid information corresponding to the identification information.

7. The apparatus of claim 6, wherein the apparatus further comprises:
a receiving module, configured to receive scene information input by a user, wherein the scene information comprises at least information about a size of the scene and information about sizes and positions of fixed reference objects in the scene; and
a first generating module, configured to generate the three-dimensional background model according to the scene information input by the user.

8. The apparatus of claim 6 or 7 , wherein the apparatus further comprises:
a transmitting module, configured to transmit the three-dimensional background model and video grid information to the video capture device that captures the surveillance video, so as to cause the video capture device to encapsulate the three-dimensional background model and video grid information in the surveillance video.

9. A storage medium, configured to store executable program code, which performs the method for three-dimensional presentation of a surveillance video of any of claims 1-4 when being executed.

10. An application program, configured to perform the method for three-dimensional presentation of a surveillance video of any of claims 1-4 when being executed.

11. An electronic device, comprising:
a processor, a memory, a communication interface, and a bus;
the processor, the memory and the communication interface connect and communicate with each other through the bus;
the memory is configured to store executable program code;
the processor is configured to read the executable program code stored in the memory to execute the executable program code, in order to perform the method for three-dimensional presentation of a surveillance video of any of claims 1-4.

## Patentansprüche

1. Verfahren zur dreidimensionalen Darstellung eines Überwachungsvideos, das auf eine elektronische Vorrichtung anwendbar ist, umfassend:
Erfassen eines Übewachungsvideos, eines vorkonfigurierten dreidimensionalen Hintergrundmodells und von Videogitterinformationen, die einer Szene entsprechen, in der das Überwachungsvideo aufgenommen wird; wobei die Videogitterinformationen Grössen von Bildbereichen in einem Videobild des Überwachungsvideos und Flächenkoordinaten der Bildbereiche in dem dreidimensionalen Hintergrundmodell umfassen;
Unterteilen des Videobildes des Überwachungsvideos gemäss der Videogitterinformation in eine Vielzahl von Bildbereichen entsprechender Grösse, und Einstellen einer Position und eines Massstabs jedes der Vielzahl von Bildbereichen, die aus dem Videobild unterteilt sind, basierend auf den Bereichskoordinaten von Bildbereichen in dem dreidimensionalen Hintergrundmodell, die in der Videogitterinformation enthalten sind, so dass jeder Bildbereich zu einem entsprechenden Bereich in dem dreidimensionalen Hintergrundmodell passt; und
Überlagern der angepassten Bildbereiche über Bereiche mit entsprechenden Koordinaten in dem dreidimensionalen Hintergrundmodell;
wobei die Videogitterinformation durch die folgenden Operationen erhalten wird:
Erfassen eines Beispiel-Überwachungsvideos, wobei die von der Videoaufnahmevorrichtung eingesetzten Parameter, um das Beispiel-Überwachungsvideo aufzunehmen, die gleichen sind wie diejenigen, die eingesetzt worden sind, um das Überwachungsvideo aufzunehmen;
Überlagern des Beispiel-Überwachungsvideos mit dem dreidimensionalen Hintergrundmodell;
Empfangen einer Teilungsbefehlseingabe durch den Benutzer, Teilen eines Videobildes in dem Beispiel-Überwachungsvideo in mehrere Bildbereiche und Aufzeichnen der Grössen dieser Bildbereiche;
Empfangen eines Anpassungsbefehls, der von dem Benutzer eingegeben wird, um eine Position und einen Massstab von jedem der mehreren Bildbereiche anzupassen, wobei der Anpassungsbefehl so ausgerichtet ist, um die Positionen und Massstäbe der Bildbereiche einzustellen, so dass jeder Bildbereich mit einem entsprechenden Bereich in dem dreidimensionalen Hintergrundmodell übereinstimmt; und
Erzeugen der Videogitterinformation entsprechend den Bereichskoordinaten der mehreren Bildbereiche vor der Einstellung und der mehreren Bildbereiche nach der Einstellung im dreidimensionalen Hintergrundmodell.

2. Verfahren nach Anspruch 1, wobei das Erfassen eines vorkonfigurierten dreidimensionalen Hintergrundmodells und von Videogitterinformationen, die einer Szene entsprechen, in der das Überwachungsvideo aufgenommen wird, umfasst:
Erfassen eines vorkonfigurierten dreidimensionalen Hintergrundmodells und von Videogitterinformationen, die in dem Überwachungsvideo eingekapselt sind und der Szene entsprechen, in der das Überwachungsvideo aufgenommen wird; und
Bestimmen von Identifikationsinformationen einer Videoerfassungsvorrichtung, die das Überwachungsvideo erfasst, und dann Erfassen eines dreidimensionalen Hintergrundmodells und von Videogitterinformationen, die den Identifikationsinformationen entsprechen, aus einem voreingestellten Speicherplatz.

3. Verfahren nach Anspruch 2, wobei das Konfigurieren des dreidimensionalen Hintergrundmodells umfasst:
Empfangen von Szeneninformationen, die von einem Benutzer eingegeben werden, wobei die Szeneninformationen mindestens Informationen über eine Grösse der Szene und Informationen über Grössen und Positionen von festen Referenzobjekten in der Szene umfassen; und
Erzeugen des dreidimensionalen Hintergrundmodells entsprechend der vom Benutzer eingegebenen Szeneninformation.

4. Verfahren nach Anspruch 2 oder 3, wobei beim Erfassen eines Überwachungsvideos ein vorkonfiguriertes dreidimensionales Hintergrundmodell und Videogitterinformationen, die in dem Überwachungsvideo eingekapselt sind und der Szene entsprechen, in der das Überwachungsvideo aufgenommen wird, das Verfahren ferner umfasst:
Übertragen des dreidimensionalen Hintergrundmodells und der Videogitterinformationen an die Videoaufnahmevorrichtung, die das Überwachungsvideo aufnimmt, um die Videoaufnahmevorrichtung zu veranlassen, das dreidimensionale Hintergrundmodell und die Videogitterinformationen in das Überwachungsvideo einzukapseln.

5. Vorrichtung zur dreidimensionalen Darstellung eines Überwachungsvideos, die auf eine elektronische Vorrichtung anwendbar ist, umfassend:
ein erstes Erfassungsmodul, das so konfiguriert ist, dass es ein Überwachungsvideo, ein vorkonfiguriertes dreidimensionales Hintergrundmodell und Videogitterinformationen erfasst, die einer Szene entsprechen, in der das Überwachungsvideo aufgenommen wird; wobei die Videogitterinformationen Grössen von Bildbereichen in einem Videobild des Überwachungsvideos und Bereichskoordinaten der Bildbereiche in dem dreidimensionalen Hintergrundmodell umfassen,
ein Verarbeitungsmodul, das so konfiguriert ist, dass es gemäss der Videogitterinformation das Videobild des Überwachungsvideos in eine Vielzahl von Bildbereichen entsprechender Grösse unterteilt und eine Position und einen Massstab jedes der Vielzahl von Bildbereichen, die aus dem Videobild unterteilt wurden, auf der Grundlage der Bereichskoordinaten von Bildbereichen in dem dreidimensionalen Hintergrundmodell, die in der Videogitterinformation enthalten sind, einstellt, so dass jeder Bildbereich zu einem entsprechenden Bereich in dem dreidimensionalen Hintergrundmodell passt;
ein erstes Überlagerungsmodul, das so konfiguriert ist, dass es die angepassten Bildbereiche auf Bereiche mit entsprechenden Koordinaten in dem dreidimensionalen Hintergrundmodell überlagert;
ein zweites Erfassungsmodul, das so konfiguriert ist, dass es ein Beispiel-Überwachungsvideo erfasst, wobei die Parameter, die die Videoerfassungsvorrichtung einsetzt, um das Beispiel-Überwachungsvideo aufzunehmen dieselben sind wie diejenigen, die eingesetzt worden sind, um das Überwachungsvideo aufzunehmen;
ein zweites Überlagerungsmodul, das so konfiguriert ist, dass es das Beispiel-Überwachungsvideo mit dem dreidimensionalen Hintergrundmodell überlagert;
ein Analysemodul, das so konfiguriert ist, dass es einen vom Benutzer eingegebenen Teilungsbefehl empfängt, ein Videobild in dem Beispielüberwachungsvideo in mehrere Bildbereiche teilt und die Grössen dieser Bildbereiche aufzeichnet; und
ein zweites Erzeugungsmodul, das so konfiguriert ist, dass es einen vom Benutzer eingegebenen Einstellbefehl empfängt, um eine Position und einen Massstab jedes der mehreren Bildbereiche einzustellen, wobei der Einstellbefehl so ausgerichtet ist, um die Positionen und Massstab der Bildbereiche einzustellen, so dass jeder Bildbereich einem entsprechendem Bereich in dem dreidimensionalen Hintergrundmodell entspricht, und die Videogitterinformationen entsprechend den Bereichskoordinaten der mehreren Bildbereiche vor der Einstellung und der mehreren Bildbereiche nach der Einstellung in dem dreidimensionalen Hintergrundmodell erzeugt.

6. Vorrichtung nach Anspruch 5, wobei das erste Erfassungsmodul umfasst:
ein erstes Erfassungsuntermodul, das so konfiguriert ist, dass es ein vorkonfiguriertes dreidimensionales Hintergrundmodell und Videogitterinformationen erfasst, die in dem Überwachungsvideo eingekapselt sind und der Szene entsprechen, in der das Überwachungsvideo aufgenommen wird; und
ein zweites Erfassungsuntermodul, das so konfiguriert ist, dass es Identifikationsinformationen einer Videoerfassungsvorrichtung, die das Überwachungsvideo erfasst, bestimmt und dann aus einem voreingestellten Speicherplatz ein dreidimensionales Hintergrundmodell und Videogitterinformationen erfasst, die den Identifikationsinformationen entsprechen.

7. Vorrichtung nach Anspruch 6, wobei die Vorrichtung weiterhin umfasst:
ein Empfangsmodul, das so konfiguriert ist, dass es von einem Benutzer eingegebene Szeneninformationen empfängt, wobei die Szeneninformationen zumindest Informationen über eine Grösse der Szene und Informationen über Grössen und Positionen von festen Referenzobjekten in der Szene umfassen; und
ein erstes Erzeugungsmodul, das so konfiguriert ist, dass es das dreidimensionale Hintergrundmodell entsprechend der vom Benutzer eingegebenen Szeneninformation erzeugt.

8. Vorrichtung nach Anspruch 6 oder 7, wobei die Vorrichtung ferner umfasst:
ein Übertragungsmodul, das so konfiguriert ist, dass es das dreidimensionale Hintergrundmodell und die Videogitterinformationen an die Videoerfassungsvorrichtung überträgt, die das Überwachungsvideo erfasst, um die Videoerfassungsvorrichtung zu veranlassen, das dreidimensionale Hintergrundmodell und die Videogitterinformationen in das Überwachungsvideo einzukapseln.

9. Speichermedium, das so konfiguriert ist, dass es ausführbaren Programmcode speichert, der das Verfahren zur dreidimensionalen Darstellung eines Überwachungsvideos nach einem der Ansprüche 1-4 durchführt, wenn es ausgeführt wird.

10. Anwendungsprogramm, das so konfiguriert ist, dass es bei seiner Ausführung das Verfahren zur dreidimensionalen Darstellung eines Überwachungsvideos nach einem der Ansprüche 1-4 ausführt.

11. Elektronische Vorrichtung, umfassend:
einen Prozessor, einen Speicher, eine Kommunikationsschnittstelle, und einen Bus;
wobei der Prozessor, der Speicher und die Kommunikationsschnittstelle über den Bus miteinander verbunden sind und kommunizieren;
wobei der Speicher so konfiguriert ist, dass er ausführbaren Programmcode speichert;
wobei der Prozessor so konfiguriert ist, dass er den im Speicher gespeicherten ausführbaren Programmcode liest, um den ausführbaren Programmcode auszuführen, um das Verfahren zur dreidimensionalen Darstellung eines Überwachungsvideos nach einem der Ansprüche 1-4 durchzuführen.

## Revendications

1. Procédé de présentation tridimensionnelle d'une vidéo de surveillance, qui est applicable à un dispositif électronique, comprenant :
acquérir une vidéo de surveillance, un modèle d'arrière-plan tridimensionnel préconfiguré et de informations de grille vidéo correspondant à une scène dans laquelle la vidéo de surveillance est capturée ; dans lequel les informations de grille vidéo comprennent les tailles des zones d'image dans une image vidéo de la vidéo de surveillance, et les coordonnées de zone des zones d'image dans le modèle d'arrière-plan tridimensionnel ;
diviser, selon les informations de grille vidéo, l'image vidéo de la vidéo de surveillance en une pluralité de zones d'image de tailles correspondantes, et ajuster une position et une échelle de chacune de la pluralité de zones d'image divisées à partir de l'image vidéo sur la base des coordonnées de zone des zones d'image dans le modèle d'arrière-plan tridimensionnel, qui sont comprises dans les informations de grille vidéo, de sorte que chaque zone d'image s'adapte à une zone correspondante dans le modèle d'arrière-plan tridimensionnel ; et
superposer les zones d'image ajustées sur des zones ayant des coordonnées correspondantes dans le modèle d'arrière-plan tridimensionnel ;
dans lequel les informations de grille vidéo sont obtenues par les opérations suivantes :
acquérir un échantillon de vidéo de surveillance, dans lequel les paramètres utilisés par le dispositif de capture vidéo pour capturer l'échantillon de vidéo de surveillance sont les mêmes que ceux-ci utilisés pour capturer la vidéo de surveillance;
superposer de l'échantillon de vidéo de surveillance sur le modèle d'arrière-plan tridimensionnel ;
recevoir une commande de division entrée par l'utilisateur, diviser une image vidéo dans l'échantillon de vidéo de surveillance en multiples zones d'image, et enregistrement des tailles de ces zones d'image ;
recevoir une commande d'ajustement entrée par l'utilisateur pour ajuster une position et une échelle de chacune des multiples zones d'image, la commande d'ajustement étant dirigée à ajuster des positions et échelle des zones d'images de sorte que chaque zone d'image s'adapte à une zone correspondante dans le modèle de fond tridimensionnel ; et
générer les informations de grille vidéo selon les coordonnées de zone des multiples zones d'image avant l'ajustement et des multiples zones d'image après l'ajustement dans le modèle de fond tridimensionnel.

2. Procédé selon la revendication 1, dans lequel acquérir un modèle d'arrière-plan tridimensionnel préconfiguré et des informations de grille vidéo correspondant à une scène dans laquelle la vidéo de surveillance est capturée comprend :
acquérir un modèle d'arrière-plan tridimensionnel préconfiguré et des informations de grille vidéo qui sont encapsulés dans la vidéo de surveillance et correspondent à la scène dans laquelle la vidéo de surveillance est capturée ; et
déterminer des informations d'identification d'un dispositif de capture vidéo qui capture la vidéo de surveillance, et puis acquérir, à partir d'un espace de stockage prédéfini, un modèle d'arrière-plan tridimensionnel et des informations de grille vidéo correspondant aux informations d'identification.

3. Procédé selon la revendication 2, dans lequel la configuration du modèle d'arrière-plan tridimensionnel comprend :
recevoir une information de scène entrée par un utilisateur, dans laquelle l'information de scène comprend au moins une information sur la taille de la scène et une information sur les tailles et les positions des objets de référence fixes dans la scène ; et
générer le modèle d'arrière-plan tridimensionnel en fonction des informations de scène entrées par l'utilisateur.

4. Procédé selon la revendication 2 ou 3, dans lequel, lors de l'acquisition d'un modèle d'arrière-plan tridimensionnel préconfiguré et d'informations de grille vidéo qui sont encapsulés dans la vidéo de surveillance et correspondent à la scène dans laquelle la vidéo de surveillance est capturée, dans le processus d'acquisition d'une vidéo de surveillance, un modèle d'arrière-plan tridimensionnel préconfiguré et des informations de grille vidéo correspondant à une scène dans laquelle la vidéo de surveillance est capturée, le procédé comprend en outre :
Transmettre le modèle d'arrière-plan tridimensionnel et des informations de grille vidéo au dispositif de capture vidéo qui capture la vidéo de surveillance, de manière à amener le dispositif de capture vidéo à encapsuler le modèle d'arrière-plan tridimensionnel et les informations de grille vidéo dans la vidéo de surveillance.

5. Appareil pour la présentation tridimensionnelle d'une vidéo de surveillance, qui est applicable à un dispositif électronique, comprenant :
un premier module d'acquisition, configuré pour acquérir une vidéo de surveillance, un modèle d'arrière-plan tridimensionnel préconfiguré et des informations de grille vidéo correspondant à une scène dans laquelle la vidéo de surveillance est capturée ; dans lequel les informations de grille vidéo comprennent des tailles de zones d'image dans une image vidéo de la vidéo de surveillance, et des coordonnées de zone des zones d'image dans le modèle d'arrière-plan tridimensionnel ;
un module de traitement, configuré pour diviser, selon les informations de grille vidéo, l'image vidéo de la vidéo de surveillance en une pluralité de zones d'image de tailles correspondantes, et ajuster une position et une échelle de chacune de la pluralité de zones d'image divisées à partir de l'image vidéo sur la base des coordonnées de zone des zones d'image dans le modèle d'arrière-plan tridimensionnel, qui sont comprises dans les informations de grille vidéo, de sorte que chaque zone d'image s'adapte à une zone correspondante dans le modèle d'arrière-plan tridimensionnel ;
un premier module de superposition, configuré pour superposer les zones d'image ajustées sur des zones ayant des coordonnées correspondantes dans le modèle d'arrière-plan tridimensionnel ;
un second module d'acquisition, configuré pour acquérir un échantillon de vidéo de surveillance dans lequel les paramètres utilisés par le dispositif de capture vidéo pour capturer l'échantillon de vidéo de surveillance sont les mêmes que ceux-ci utilisés pour capturer la vidéo de surveillance ;
un second module de superposition, configuré pour superposer l'échantillon de vidéo de surveillance sur le modèle d'arrière-plan tridimensionnel ;
un module d'analyse, configuré pour recevoir une commande de division entrée par l'utilisateur, diviser une image vidéo dans l'échantillon de vidéo de surveillance en multiples zones d'image, et enregistrer les tailles des zones d'image ; et
un second module de génération, configuré pour recevoir une commande d'ajustement entrée par l'utilisateur pour ajuster une position et une échelle de chacune des multiples zones d'image, la commande d'ajustement étant dirigée à ajuster des positions et l'échelle des zones d'image de sorte que chaque zone d'image s'adapte à une zone correspondante dans le modèle de fond tridimensionnel ; et
générer les informations de grille vidéo selon les coordonnées de zone des multiples zones d'image avant ajustement et des multiples zones d'image après ajustement dans le modèle d'arrière-plan tridimensionnel.

6. Appareil selon la revendication 5, dans lequel le premier module d'acquisition comprend :
un premier sous-module d'acquisition, configuré pour acquérir un modèle d'arrière-plan tridimensionnel préconfiguré et des informations de grille vidéo qui sont encapsulés dans la vidéo de surveillance et correspondent à la scène dans laquelle la vidéo de surveillance est capturée ; et
un deuxième sous-module d'acquisition, configuré pour déterminer des informations d'identification d'un dispositif de capture vidéo qui capture la vidéo de surveillance, puis acquérir, à partir d'un espace de stockage prédéfini, un modèle d'arrière-plan tridimensionnel et des informations de grille vidéo correspondant aux informations d'identification.

7. Appareil selon la revendication 6, dans lequel l'appareil comprend en outre :
un module de réception, configuré pour recevoir des informations de scène entrées par un utilisateur, dans lequel les informations de scène comprennent au moins des informations sur une taille de la scène et des informations sur des tailles et des positions d'objets de référence fixes dans la scène ; et
un premier module de génération, configuré pour générer le modèle d'arrière-plan tridimensionnel en fonction des informations de scène entrées par l'utilisateur.

8. Appareil selon la revendication 6 ou 7, dans lequel l'appareil comprend en outre :
un module de transmission, configuré pour transmettre le modèle d'arrière-plan tridimensionnel et les informations de grille vidéo au dispositif de capture vidéo qui capture la vidéo de surveillance, de manière à amener le dispositif de capture vidéo à encapsuler le modèle d'arrière-plan tridimensionnel et les informations de grille vidéo dans la vidéo de surveillance.

9. Support de stockage, configuré pour stocker un code de programme exécutable, qui réalise le procédé de présentation tridimensionnelle d'une vidéo de surveillance de l'une quelconque des revendications 1 à 4 lorsqu'il est exécuté.

10. Programme d'application, configuré pour exécuter le procédé de présentation tridimensionnelle d'une vidéo de surveillance de l'une quelconque des revendications 1 à 4 lorsqu'il est exécuté.

11. Dispositif électronique, comprenant :
un processeur, une mémoire, une interface de communication, et un bus ;
le processeur, la mémoire et l'interface de communication se connectent et communiquent entre eux par l'intermédiaire du bus ;
la mémoire étant configurée pour stocker un code de programme exécutable ;
le processeur étant configuré pour lire le code de programme exécutable stocké dans la mémoire pour exécuter le code de programme exécutable, afin de réaliser le procédé de présentation tridimensionnelle d'une vidéo de surveillance de l'une quelconque des revendications 1 à 4.
